# EUROPÄISCHE PATENTANMELDUNG

(11) **EP 1 666 230 A1**
(43) Veröffentlichungstag der Anmeldung: **07.06.2006**
(21) Anmeldenummer: 05026056.1
(22) Anmeldetag: 30.11.2005
(51) Int. Cl.: B29C 45/14, B24D 18/00, B24D 13/00, A46B 3/00

(54) **Vlieskörper und Verfahren zu dessen Herstellung**

(30) Priorität: 01.12.2004 DE 102004058095
(71) Anmelder: Elfgen, Gerd, 50389 Wesseling (DE)
(72) Erfinder: Elfgen, Gerd, 50389 Wesseling (DE)
(74) Vertreter: Bauer, Dirk

(57) **Zusammenfassung**

Offenbart ist zunächst ein Verfahren zur Herstellung eines Vlieskörpers (2) mit einem Aufnahmeelement (12) aus einem Polymermaterial, an dem ein Drehmoment um eine Achse (6) in den Vlieskörper (2) einleitbar ist, wobei das Polymermaterial in flüssigem Zustand um einen Durchstoßpunkt (3), an dem die Achse (6) den Vlicskörper (2) durchstößt, in den Vlieskörper (2) eingebracht und anschließend ausgehärtet wird. Vorgeschlagen wird, dass das Polymermaterial ein Thermoplast ist und mittels einer Spritzgießmaschine in den Vlieskörper (2) eingebracht wird.

Offenbart ist weiterhin ein um eine Achse (6) rotierbarer Vlieskörper (2), der um einen Durchstoßpunkt (3), in dem die Achse (6) den Vlieskörper (2) durchstößt, ein aus einem Polymermaterial ausgebildetes Aufnahmeelement (12) aufweist, an dem ein Drehmoment in den Vlieskörper (2) einleitbar ist. Vorgeschlagen wird, dass das Polymermaterial ein Thermoplast ist. Vorgeschlagen wird zuletzt, die vorstehend beschriebenen Vlieskörper (2) als Schleifscheiben in Richtung der Achse (6) hintereinander auf einem rotierbaren Walzenkörper (14) einer Parkettschleifwalze anzubringen.

## Beschreibung

### Einleitung

Die Erfindung betrifft zunächst ein Verfahren zur Herstellung eines Vlieskörpers mit einem Aufnahmeelement aus einem Polymermaterial, an dem ein Drehmoment um eine Achse in den Vlieskörper einleitbar ist, wobei das Polymermaterial in flüssigem Zustand um einen Durchstoßpunkt, an dem die Achse den Vlieskörper durchstößt, in den Vlieskörper eingebracht und anschließend ausgehärtet wird. Die Erfindung betrifft weiterhin einen um eine Achse rotierbaren Vlieskörper, der um einen Durchstoßpunkt, in dem die Achse den Vlieskörper durchstößt, ein aus einem Polymermaterial ausgebildetes Aufnahmeelement aufweist, an dem ein Drehmoment in den Vlieskörper einleitbar ist.

Derartige Vlieskörper sind beispielsweise zur Verwendung als Grobreinigungsscheiben der Firma 3M (www.3m.com, Handelsname "3M Clean & Strip") allgemein bekannt. Das Vlies, aus dem die bekannten Vlieskörper aufgebaut sind, weist ein Korundschleifmittel auf. Die bekannten Vlieskörper weisen ein Aufnahmeelement aus einem Duroplastmaterial auf. In das flüssige Duroplastmaterial wird bei der Herstellung der bekannten Vlieskörper ein Gewindestift eingesetzt, der nach dem Aushärten fest mit dem Aufnahmekörper verbunden ist.

### Aufgabe

Der Erfindung liegt die Aufgabe zugrunde, ein alternatives, insbesondere flexibleres und preisgünstigeres Verfahren zur Herstellung derartiger Vlieskörper vorzuschlagen.

### Lösung

Ausgehend von den bekannten Verfahren wird nach der Erfindung vorgeschlagen, dass das Polymermaterial ein Thermoplast ist und mittels einer Spritzgießmaschine in den Vlieskörper eingebracht wird. Die Verwendung von thermoplastische Kunststoffen eröffnet einerseits die Möglichkeit der Verwendung einfacher Spritzgießmaschinen und damit einer hochgradigen Automatisierung der Herstellung mit hohen Taktzahlen. Thermoplaste sind gegenüber Duroplasten sowohl einfacher zu verarbeiten, als auch hinsichtlich der Grundstoffe erheblich preisgünstiger. Die Erfindung ermöglicht so eine gegenüber den bekannten Verfahren signifikant preisgünstigere Herstellung.

Vorzugsweise wird der Vlieskörper in eine Gießform eingelegt und das Polymermaterial in die Gießform gespritzt. Auf diese Weise wird die Ausbildung des Aufnahmeelements über die definierte Geometrie der Wandungen der Gießform hinaus vermieden. So können insbesondere an dem Aufnahmeelement Kontaktflächen ausgebildet werden, in denen das Aufnahmeelement an einer korrespondierenden Fläche eines Werkzeugs oder eines weiteren Aufnahmeelements anliegt. Eine Kontaktfläche kann darüber hinaus Kontaktelemente (beispielsweise Verzahnungen) aufweisen, mittels derer sie an einer korrespondierenden Fläche zentriert oder mit dieser zwecks Übertragung des Drehmoments verbindbar ist.

Alternativ zum Einlegen in eine Gießform kann bei großvolumigen Vlieskörpern das Polymermaterial auch ohne Form derart in den Vlieskörper gespritzt werden, dass es sich ausgehend von dem Durchstoßpunkt ungehindert ausbreitet. So wird - insbesondere wenn der Vlieskörper zum Polieren eingesetzt werden soll - die Ausbildung harter Kanten an dem Vlieskörper vermieden.

Besonders bevorzugt wird in dem Durchstoßpunkt ein Kern in den Vlieskörper eingebracht, das Polymermaterial durch den Kern in den Vlieskörper gespritzt und so an dem Aufnahmeelement eine Ausnehmung in Form des Kerns ausgebildet. Gegenüber dem bekannten Verfahren, bei dem in das flüssige Polymermaterial ein Gewindestift eingesetzt wird, der durch das Aushärten fest mit dem Aufnahmekörper verbunden wird, ist die Herstellung des Aufnahmeelements so signifikant vereinfacht.

Ausgehend von den bekannten Vlieskörpern wird nach der Erfindung vorgeschlagen, dass das Polymermaterial ein Thermoplast ist. Die Vorteile der Verwendung eines Thermoplastmaterial wurden weiter oben bereits erläutert.

Vorzugsweise weist ein erfindungsgemäßer Vlicskörper eine sich parallel zu der Achse erstreckende Ausnehmung in dem Aufnahmeelement auf. Eine derartige Ausnehmung, die - wie beschrieben - insbesondere mittels eines in den Vlieskörper eingebrachten Kerns ausgebildet werden kann, bietet eine besonders einfache Möglichkeit, den erfindungsgemäßen Vlieskörper auf einer rotierbaren Welle aufzunehmen.

Besonders bevorzugt durchdringt diese Ausnehmung den erfindungsgemäßen Vlieskörper. So ist eine Mehrzahl erfindungsgemäßer Vlieskörper hintereinander auf einer rotierbaren Welle aufnehmbar. Alternativ können erfindungsgemäße Vlieskörper in den Kontaktflächen derart Ausnehmungen und Verzahnungen aufweisen, dass benachbarte Vlieskörper auch ohne eine sie durchdringende Welle in radialer und in Umfangsrichtung miteinander gegen Verschiebung und drehmomentfest verblockt sind. Derart wellenlos verbundene Vlieskörper bilden, was insbesondere für den Handbetrieb einer Poliervorrichtung vorteilhaft ist, eine besonders leichte Einheit.

Die Ausnehmung kann beispielsweise einen Sechskantquerschnitt aufweisen. Der erfindungsgemäße Vlieskörper ist dann auf einer rotierbaren Welle, die als Sechskantstange ausgebildet ist, durch Aufstecken drehmomentfest aufnehmbar. Die Verwendung einer Sechskantstange als Welle bietet sich zum Einen an, weil diese als Massenware preiswert verfügbar ist und der Sechskant zum Andern mittels eines Drcibacken-Spannfutters einer handelüblichen Bohrmaschine aufnehmbar ist.

Weiterhin weist an einem erfindungsgemäßen Vlieskörper das Aufnahmeelement bevorzugt in Richtung der Achse eine geringere Ausdehnung auf als der Vlieskörper. Werden mehrere solche erfindungsgemäßen Vlieskörper (beispielsweise auf einer rotierbaren Welle) zu einer Vlieswalze derart zusammengefügt, dass die Aufnahmeelemente benachbarter Vlieskörper in Kontakt stehen, so werden die einzelnen Vlieskörper in Achsrichtung gestaucht. Das Vliesmatmal benachbarter Vlieskörper greift dann ineinander, so dass diese Vlieskörper auch im Bereich des Vliesmaterials eine Verbindung aufweisen, mittels derer - wenn auch in geringerem Maße - bis zur Mantelfläche ein Drehmoment übertragbar ist.

Ein erfindungsgemäßer Vlieskörper ist vorteilhaft um die Achse rotationssymmetrisch und senkrecht zu der Achse scheibenförmig ausgebildet. Der erfindungsgemäße Vlieskörper kann ein Korundschleifmittel aufweisen. Besonders vorteilhafter Weise kommen solche erfindungsgemäßen Vlieskörper als Schleifscheiben einer Parkettschleifwalze zum Einsatz.

Die Schleifscheiben werden in Richtung der Achse hintereinander auf dem rotierbaren Walzenkörper angebracht.

### Ausführungsbeispiel

Die Erfindung wird nachfolgend anhand eines Ausfuhrungsbeispiels erläutert. Es zeigt
- Fig. 1: eine Vorstufe eines erfindungsgemäßen Vlieskörpers,
- Fig. 2: diese Vorstufe nach dem Einlegen des Kerns,
- Fig. 3: den erfindungsgemäßen Vlieskörper und
- Fig. 4: diesen Vlieskörper in montiertem Zustand auf einer Parkettschleifwalze sowie
- Fig. 5: einen Schnitt durch diesen Vlieskörper entlang der Achse der Parkettschleifwalze.

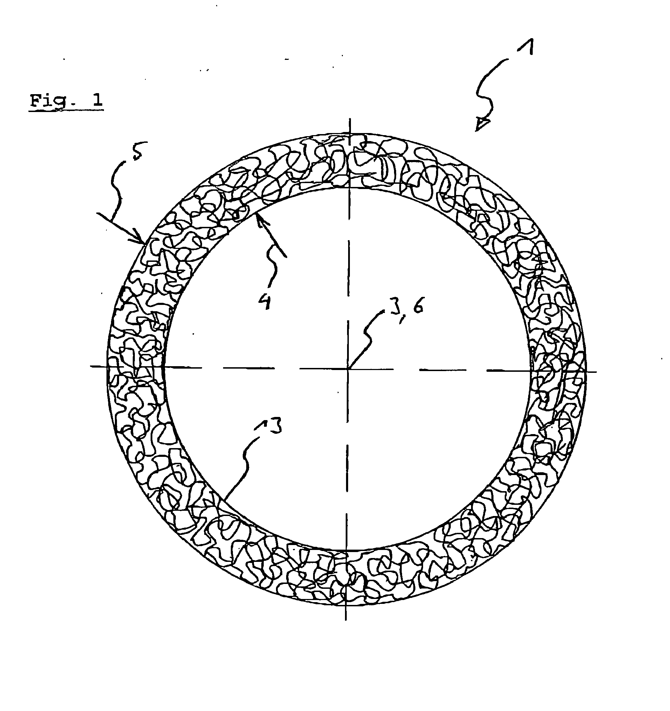

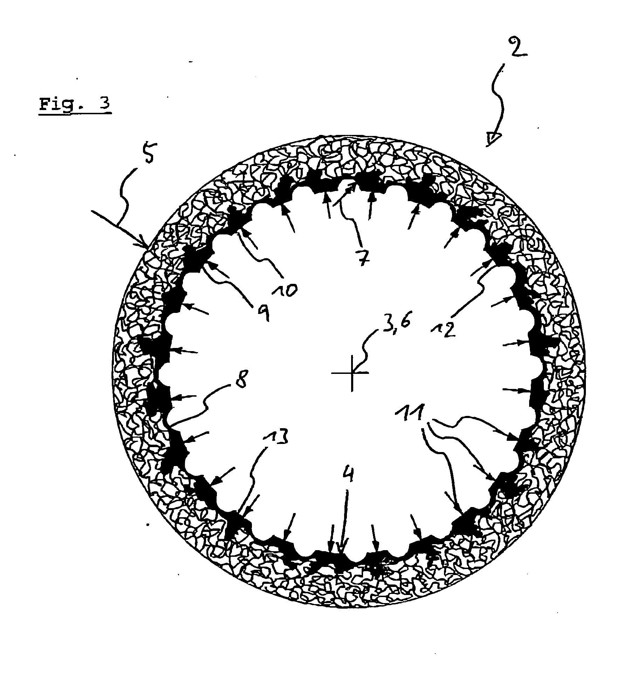

Die in Figur 1 gezeigte Vorstufe 1 des in Figur 3 dargestellten erfindungsgemäßen Vlieskörpers 2 besteht aus einem mit einem Korundschleifmittel versehenen flexiblen Kunststoffvlies. Die Vorstufe 1 ist um einen Durchstoßpunkt 3 kreisringförmig mit einem inneren Durchmesser 4, einem äußeren Durchmesser 5 und einer senkrecht zur Bildebene durch den Durchstoßpunkt 3 verlaufenden Achse 6 ausgebildet.

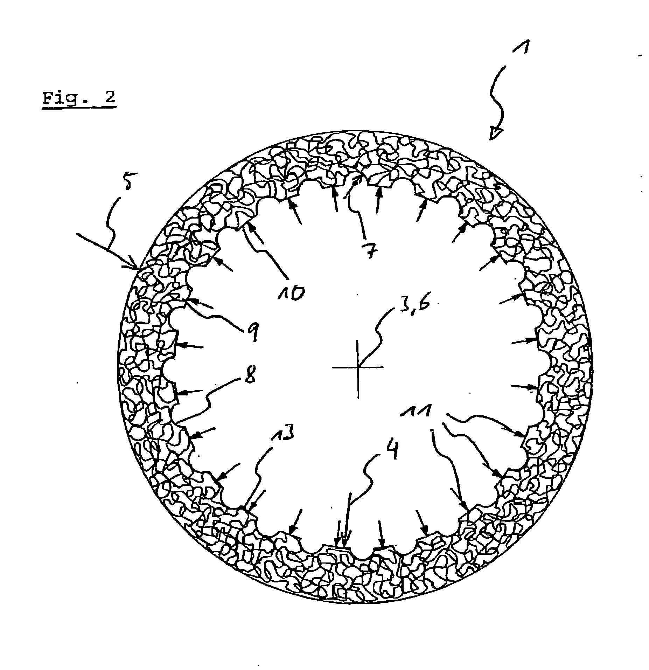

Figur 2 zeigt die Vorstufe 1 in einem verformten Zustand, der sich durch Einlegen der Vorstufe 1 in eine nicht dargestellte Gießform und Einbringen eines gleichfalls nicht dargestellten Kerns in die Vorstufe 1 einstellt: Der Kern weist 24 gleichmäßig auf seinem Umfang verteilte, radial nach außen über den inneren Durchmesser 4 der Vorstufe 1 vorstehende Nasen auf, die sich beim Einbringen des Kern in das Kunststoffvlies der Vorstufe 1 eindrücken. Die Nasen weisen in Richtung der Achse 6 einen halbkreisförmigen Querschnitt mit einem Radius 7 auf und bilden beim Einbringen des Kerns in der Vorstufe 1 in Richtung der Achse 6 verlaufende, gleichfalls halbkreisförmige Nuten 8 sowie zwischen diesen jeweils Zähne 9 mit in Richtung der Achse 6 trapezförmigem Querschnitt aus. Der Kern weist jeweils mittig auf den Stirnflächen 10 der Zähne 9 Angusskanäle 11 auf, deren Lage in den Figuren 2 und 3 mit Pfeilen gekennzeichnet ist auf und durch die ein nicht dargestelltes Thermoplastmaterial mittels einer gleichfalls nicht dargestellten Spritzgießmaschine in die Vorstufe 1 des Vlieskörpers 2 gespritzt werden kann.

Figur 3 zeigt den fertigen erfindungsgemäßen Vlieskörper 2, an dem durch Einspritzen des Thermoplastmaterials ein Aufnahmeelement 12 ausgebildet wurde. Das Thermoplastmaterial dringt aus den Angusskanälen 11 in die an der Vorstufe 1 ausgebildeten Zähne 9 und auf nur statistisch vorherbestimmten Wegen in die Hohlräume des Kunststoffvlieses. An der Innenfläche 13 des Vlieskörpers 2, an der die Vorstufe 1 an dem Kern anliegt, ist das Kunststoffvlies leicht komprimiert. Aufgrund der dadurch lokal erhöhten Kapillarwirkung des Vlieses fließt das Thermoplastmaterial entlang der Innenfläche 13, so dass sich ein kreisringförmig geschlossenes Aufnahmeelement 12 ausbildet. Gegebenen Falls wird die nicht dargestellte Außenfläche des Kerns beheizt, somit die Viskosität des Thermoplastmaterials lokal vermindert und dessen Fließfähigkeit entlang der Innenfläche 13 des Vlieskörpers 2 gesteigert.

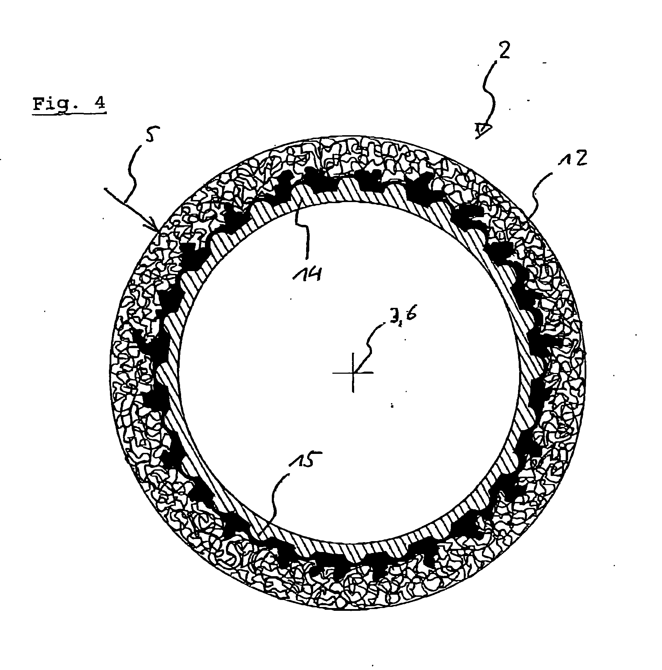

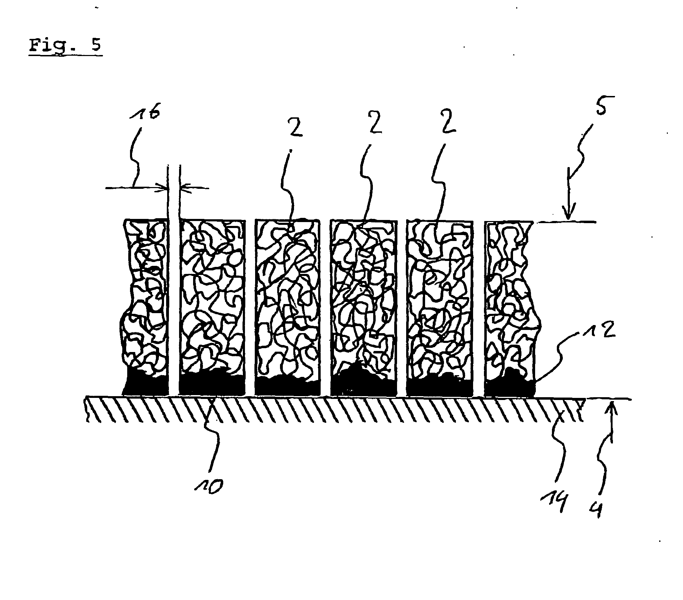

Die Figuren 4 und 5 zeigen erfindungsgemäße Vlieskörper 2, die auf dem Walzenkörper 14 einer weiter nicht dargestellten Parkettschleifmaschine vormontiert sind. Der Walzenkörper 14 weist ein genormtes Profil auf, das mit halbkreisförmig ausgebildeten Nasen 15 in die an dem Vlieskörper 2 ausgebildeten Nuten 8 eingreift. Die Vlieskörper 2 sind auf dem Walzenkörper 14 locker aufgebracht und weisen in Richtung der Achse 6 noch einen geringfügigen Abstand 16 auf. Zum Abschluss der Montage werden die Vlieskörper 2 in Richtung der Achse 6 zusarnmengeschoben, so dass die Aufnahmeelemente 12 aneinander anliegen.

In den Figuren sind
- 1: Vorstufe
- 2: Vlieskörper
- 3: Durchstoßpunkt
- 4: innerer Durchmesser
- 5: äußerer Durchmesser
- 6: Achse
- 7: Radius
- 8: Nut
- 9: Zahn
- 10: Stirnfläche
- 11: Angusskanal
- 12: Aufnahmeelement
- 13: Innenfläche
- 14: Walzenkörper
- 15: Nase
- 16: Abstand

## Patentansprüche

1. Verfahren zur Herstellung eines Vlieskörpers (2) mit einem Aufnahmeelement (12) aus einem Polymermaterial, an dem ein Drehmoment um eine Achse (6) in den Vlieskörper (2) einleitbar ist, wobei das Polymermaterial in flüssigem Zustand um einen Durchstoßpunkt (3), an dem die Achse (6) den Vlieskörper (2) durchstößt, in den Vlieskörper (2) eingebracht und anschließend ausgehärtet wird, ***dadurch gekennzeichnet, dass*** das Polymermaterial ein Thermoplast ist und mittels einer Spritzgießmaschine in den Vlieskörper (2) eingebracht wird.

2. Verfahren nach dem vorgenannten Anspruch, ***dadurch gekennzeichnet, dass*** der Vlieskörper (2) in eine Gießform eingelegt und das Polymermaterial in die Gießform gespritzt wird.

3. Verfahren nach einem der vorgenannten Ansprüche, ***dadurch gekennzeichnet, dass*** in dem Durchstoßpunkt (3) ein Kern in den Vlieskörper (2) eingebracht, das Polymermaterial durch den Kern in den Vlieskörper (2) gespritzt und an dem Aufnahmeelement (12) eine Ausnehmung in Form des Kerns ausgebildet wird.

4. Um eine Achse (6) rotierbarer Vlieskörper (2), der um einen Durchstoßpunkt (3), in dem die Achse (6) den Vlieskörper (2) durchstößt, ein aus einem Polymermaterial ausgebildetes Aufnahmeelement (12) aufweist, an dem ein Drehmoment in den Vlieskörper (2) einleitbar ist, ***dadurch gekennzeichnet, dass*** das Polymermaterial ein Thermoplast ist.

5. Vlieskörper (2) nach dem vorgenannten Anspruch, ***gekennzeichnet durch*** eine sich parallel zu der Achse (6) erstreckende Ausnehmung in dem Aufnahmeelement (12).

6. Vlieskörper (2) nach dem vorgenannten Anspruch, ***dadurch gekennzeichnet, dass*** die Ausnehmung den Vlieskörper (2) durchdringt.

7. Vlieskörper (2) nach einem der Ansprüche 5 oder 6, ***dadurch gekennzeichnet, dass*** die Ausnehmung einen Sechskantquerschnitt aufweist.

8. Vlieskörper (2) nach einem der Ansprüche 4 bis 7, ***dadurch gekennzeichnet, dass*** das Aufnahmeelement (12) in Richtung der Achse (6) eine geringere Ausdehnung aufweist als der Vlieskörper (2).

9. Vlieskörper (2) nach einem der Ansprüche 4 bis 8, ***dadurch gekennzeichnet, dass*** der Vlieskörper (2) um die Achse (6) rotationssymmetrisch ausgebildet ist.

10. Vlieskörper (2) nach einem der Ansprüche 4 bis 9, ***dadurch gekennzeichnet, dass*** der Vlieskörper (2) senkrecht zu der Achse (6) scheibenförmig ausgebildet ist.

11. Vlieskörper (2) nach einem der Ansprüche 4 bis 10, ***dadurch gekennzeichnet, dass*** ein Vlies, aus dem der Vlieskörper (2) aufgebaut ist, ein Korundschleifmittel aufweist.

12. Parkettschleifwalze mit Schleifscheiben, die in Richtung einer Achse (6) hintereinander auf einem rotierbaren Walzenkörper (14) anbringbar sind, ***dadurch gekennzeichnet, dass*** die Schleifscheiben als Vlieskörper (2) nach einem der Ansprüche 4 bis 11 ausgebildet sind.
